# FASCICULE DE BREVET EUROPEEN

(11) **EP 4 137 214 B1**
(45) Date de publication et mention de la délivrance du brevet: **28.08.2024**
(21) Numéro de dépôt: 22183271.0
(22) Date de dépôt: 06.07.2022
(51) Int. Cl.: A63B 29/02, D07B 5/00, A62B 35/00

(54) **CORDE À COUTURE RADIALE ET PROCÉDÉ DE RÉALISATION**
SEIL MIT RADIALER NAHT UND SEIN HERSTELLUNGSVERFAHREN
ROPE WITH RADIAL SEAM AND MANUFACTURING METHOD

(30) Priorité: 16.08.2021 FR 2108716
(43) Date de publication de la demande: 22.02.2023
(73) Titulaire: Zedel, 38920 Crolles (FR)
(72) Inventeur: HEDE, Jean-Marc, 38420 DOMÈNE (FR)
(74) Mandataire: Talbot, Alexandre

(56) Documents cités:
- EP-A1- 2 186 551
- FR-A1- 3 061 211
- US-A- 5 205 803

## Description

### Domaine technique

L'invention concerne une corde et un procédé de réalisation d'une corde.

### État de la technique

Dans de nombreuses activités telles que l'alpinisme, l'escalade et les travaux en hauteurs, il est classique de former une boucle à une extrémité d'une corde pour y insérer un connecteur ou un point d'ancrage.

Il est connu de réaliser un noeud en bout de corde afin de définir la boucle. Cependant, cette approche est difficilement recommandable car elle est fortement dépendante de la personne qui réalise le noeud. Il est également connu de replier l'extrémité de la corde de manière à définir une boucle. Les deux plis de la corde sont cousus l'un sur l'autre. La maitrise du procédé de couture permet de maitriser la tenue mécanique de la boucle ce qui en fait une terminaison de corde avec un meilleur suivi industriel. Cependant, il faut reconnaitre que cette solution technique se traduit par un encombrement doublé en bout de corde. Un tel encombrement peut être particulièrement contraignant lorsque la corde est utilisée dans des endroits exigus, notamment dans le domaine de l'élagage.

Il est également connu de modifier l'extrémité de la corde de manière à réaliser une épissure. Une partie de l'âme de la corde est supprimée afin de pouvoir réintroduire l'extrémité de corde à l'intérieur de la gaine après la formation de la boucle. Là encore la fixation des deux morceaux de la corde est réalisée par couture. Réaliser une épissure nécessite une opération manuelle ce qui rend cette solution technique peut intéressante et chère.

Enfin, il est connu de réaliser une boucle à l'extrémité de la corde au moyen d'une sangle. La sangle possède une largeur qui est bien plus importante que le diamètre de la corde. Les deux extrémités de la sangle sont repliées l'une sur l'autre pour définir une boucle et l'extrémité de la corde est disposée entre les deux plis de la sangle. Plusieurs lignes de couture sont réalisées pour fixer ensemble les deux plis de la sangle ainsi que la corde. Les lignes de couture sont réalisées perpendiculairement à l'axe longitudinal de la corde et perpendiculairement à plan médian passant par un diamètre de la corde et correspondant à l'interface entre les deux plis de la sangle. Selon les secteurs, le fil utilisé pour réaliser la couture traverse uniquement les deux plis de la sangle, les deux plis de la sangle et la gaine ou les deux plis dans la sangle, deux épaisseurs de la gaine et l'âme. Selon la position de la couture, une épaisseur plus ou moins importante d'âme est liée au fil de la couture. Cette solution est relativement facile à mettre en oeuvre, le cout de cette opération reste maitrisé mais l'encombrement général est assez important ce qui peut être gênant dans certaines activités et notamment dans l'élagage.

Il ressort également que la couture entre la sangle et l'ensemble formé par la gaine et l'âme n'est pas homogène ce qui incite à augmenter la surface de fixation occupée par les coutures pour obtenir la résistance attendue.

Le document US 5 205 803 A divulgue une corde comportant: une âme, une gaine entourant l'âme, une sangle et une couture au moyen d'au moins un fil traversant la sangle et la gaine. U

### Exposé de l'invention

Un objet de l'invention consiste à pallier ces inconvénients, et plus particulièrement à fournir une corde qui est plus facile à utiliser que les cordes de l'art antérieur car elle possède une sangle intégrée de manière plus compacte. On tend à résoudre ces inconvénients au moyen d'une corde qui comporte.
- une âme s'étendant selon un axe longitudinal ;
- une gaine entourant l'âme, la gaine s'étendant selon l'axe longitudinal ;
- une sangle recouvrant au moins partiellement la gaine selon une section perpendiculaire à l'axe longitudinal, la sangle étant séparée de l'âme par la gaine ;
- au moins un fil traversant plusieurs fois la sangle, la gaine et l'âme pour former plusieurs liaisons qui montent fixement la sangle sur l'âme et la gaine.

La corde est remarquable en ce que les liaisons traversent une section centrale de l'âme, la section centrale correspondant à une section circulaire représentant moins de 50% de la section de l'âme et en ce que les liaisons sont décalés angulairement les unes des autres lors d'une observation selon l'axe longitudinal.

Selon un aspect de l'invention, les liaisons s'étendent selon des diamètres de l'ensemble formé par l'âme et la gaine.

De manière préférentielle, les liaisons sont contenues dans un plan qui est perpendiculaire à l'axe longitudinal.

Avantageusement, deux liaisons consécutives sont décalées selon l'axe longitudinal.

Dans un mode de réalisation préférentiel, les liaisons s'étendent sur un secteur angulaire au moins égal à 180°. Préférentiellement, les liaisons s'étendent sur un secteur angulaire au moins égal à 360°.

Dans une configuration avantageuse, la sangle est repliée pour former une boucle, deux plis de la sangle étant montés fixement à la gaine.

Il est également intéressant de prévoir une configuration dans laquelle la boucle est fixée à une extrémité de la gaine et s'étend selon l'axe longitudinal dans le prolongement de la gaine.

L'invention a également pour objet un procédé de réalisation d'une corde qui est facile à mettre en oeuvre et qui est performant et qui permet de mieux intégrer une sangle sur une gaine.

On tend à atteindre ce résultat au moyen d'un procédé de réalisation d'une corde selon l'une quelconque des configurations précédentes comportant les étapes suivantes :
- fournir une âme et une gaine recouvrant l'âme, l'âme et la gaine s'étendant selon un axe longitudinal ;
- fournir une sangle ;
- recouvrir la gaine par la sangle ;
- monter fixement la sangle sur la gaine et l'âme au moyen d'au moins un fil qui traverse à plusieurs reprises une section centrale de l'âme, la gaine et la sangle, la section centrale correspondant à une section circulaire représentant moins de 50% de la section de l'âme.

Le procédé est remarquable en ce que les liaisons sont décalées angulairement les uns des autres par rotation de la sangle, de l'âme et de la gaine autour de l'axe longitudinal par rapport à une aiguille qui introduit le fil dans la sangle, la gaine et l'âme.

### Description des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1, illustre schématiquement une vue en coupe d'une corde avec une sangle qui recouvre partiellement la gaine ;
- la figure 2, illustre schématiquement une vue en coupe d'une corde avec une sangle qui recouvre quasi-entièrement la gaine ;
- la figure 3, illustre schématiquement une vue en coupe longitudinale et une vue de dessus d'une corde terminée par une boucle formée par une sangle ;
- la figure 4, illustre schématiquement une vue en coupe longitudinale et une vue de dessus d'un autre mode de réalisation d'une corde terminée par une boucle formée par une sangle ;
- la figure 5, illustre schématiquement une étape de couture d'un fil à travers la sangle, la gaine et l'âme.

### Description détaillée

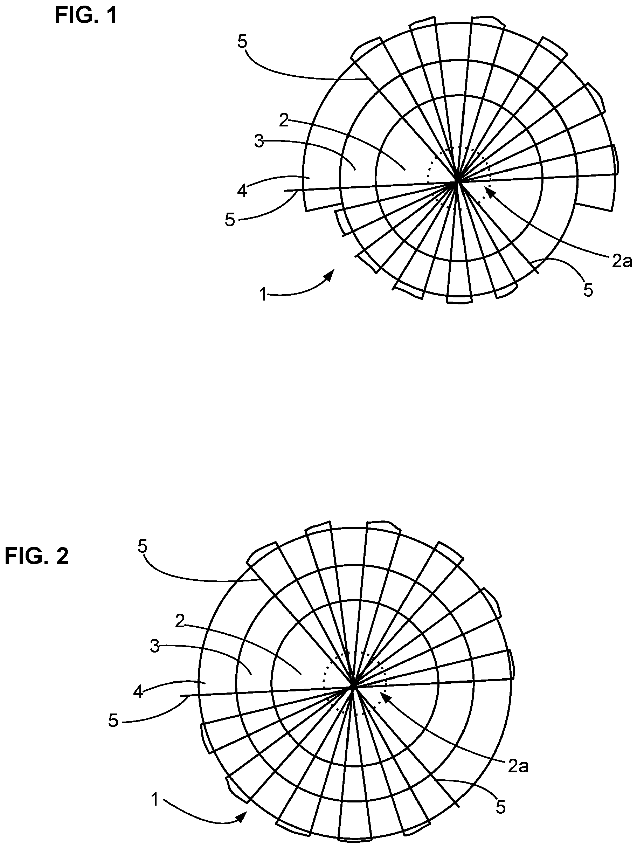

Comme illustré sur les figures 1, 2, 3, 4 et 5, la corde 1 possède une âme 2 et une gaine 3 qui s'étendent toutes les deux selon un axe longitudinal A. La gaine 3 entoure l'âme 2. La gaine 3 se présente sous la forme d'un anneau qui entoure l'âme 2. L'âme 2 et la gaine 3 possèdent une section circulaire. Par section circulaire, on entend un cercle parfait ou légèrement déformé. La corde peut être une corde dynamique, une corde semi-statique ou une corde statique.

L'âme 2 possède des performances mécaniques supérieures à celles de la gaine 3. Les performances mécaniques sont étudiées selon l'axe longitudinal de la corde 1. La corde 1 est fonctionnalisée au moyen d'une sangle 4 qui est montée fixement sur la gaine 3 de la corde 1. La sangle 4 est séparée de l'âme 2 au moyen de la gaine 3. La sangle 4 est montée inamovible de l'âme 2 et de la gaine 3.

Dans une configuration particulière illustrée à la figure 1, la sangle 4 recouvre partiellement la paroi externe de la gaine 3 dans une coupe perpendiculaire à l'axe longitudinal de la corde 1. Dans une autre configuration particulière illustrée à la figure 2, la sangle 4 recouvre la totalité de la paroi externe de la gaine 3 dans une coupe perpendiculaire à l'axe longitudinal de la corde 1. De manière préférentielle, la sangle 4 recouvre partiellement ou en totalité l'extrémité de la gaine 3. La paroi externe de la gaine 3 se présente sous la forme d'un cercle et la sangle 4 est déformée pour reproduire le cercle ou au moins un arc de cercle.

La sangle 4 est montée fixement sur la gaine 3 et sur l'âme 2 au moyen d'au moins un fil 5 qui traverse la gaine 3, l'âme 2 et la sangle 4 pour former une couture. Le au moins un fil 5 traverse à plusieurs reprises la gaine 3, l'âme 2 et la sangle 4 pour lier fixement la sangle 4 sur la gaine 3. Le au moins un fil 5 forme une liaison qui est une liaison mécanique entre la sangle 4 et les fils ou filaments qui forment l'âme 2. Le fil 5 entre et sort à plusieurs reprises de la paroi externe de la gaine pour former plusieurs points de couture consécutifs.

La couture est réalisée radialement ou sensiblement radialement pour former une couture plus performante que les configurations de l'art antérieur. Le au moins un fil 5 s'étend selon un diamètre ou sensiblement un diamètre de l'ensemble formé par l'âme 2 et la gaine 3. Le fil 5 traverse la sangle 4 en prolongeant le diamètre. La sangle 4 est plaquée sur la face externe de la gaine 3 pour reproduire la courbure de la gaine 3.

Lorsque le fil 5 passe à travers successivement la sangle 4, une première épaisseur de la gaine 3, l'âme 2 et une deuxième épaisseur de la gaine 3, il forme un lien mécanique entre toutes les couches traversées. Cette traversée du fil 5 à travers les différentes couches forme le lien mécanique entre la sangle d'une part et la gaine 3 et l'âme 2 d'autre part. L'âme 2 est formée par une multitude de fils et/ou de filaments. Le fil 5 se lie aux multiples fils et filaments qui forment l'âme 2.

Le fil 5 passe à travers une section centrale de l'âme 2 afin de former une liaison mécanique plus performante. La section centrale correspond à une section circulaire représentant moins de 50% de la section de l'âme 2. Les liens sont décalés angulairement les uns des autres de manière à prendre appui sur une surface importante de la gaine 3 et se lier avec une quantité importante de fils ou filaments qui forment l'âme 2.

Pour réaliser une liaison mécanique plus résistance entre la sangle 4 et l'âme 2, il est préférable que le fil 5 réalisant la liaison traverse la distance la plus importante possible de l'âme 2. De manière préférentielle, toutes les liaisons entre la sangle 4 et l'âme 2 passe par la section centrale. De manière encore plus préférentielle, toutes les liaisons entre la sangle 4 et l'âme 2 passent par une section centrale représentant 30% de la section de la gaine, voire une section centrale représentant 15% de la section de la gaine ou encore passe par le centre exact de l'âme 2. Il est avantageux que la majorité des liaisons voire toutes les liaisons formées par le fil 5 se présentent sous la forme d'un diamètre de l'ensemble formé par la gaine 3 et l'âme 2.

Afin d'avoir un maximum de liaison qui traversent une épaisseur importante d'âme 2, les liaisons sont décalées angulairement les unes des autres de manière à lier efficacement la sangle 4 et l'âme 2 sur toute la zone de recouvrement de la sangle 4 sur la gaine 3. A titre d'exemple, le décalage angulaire entre deux liaisons consécutives est compris entre 10° et 70°, préférentiellement entre 20° et 70°, encore plus préférentiellement entre 30° et 70°. Avantageusement, les liaisons successives sont décalées d'un angle constant. Le décalage angulaire est visible lorsque les liaisons sont observées selon l'axe longitudinal A. Les coutures radiales consécutives s'étendent sur au moins deux arcs de cercle égaux à 45°, de préférence au moins deux arcs de cercle égaux à 90° et encore plus préférentiellement au moins deux arcs de cercle égaux à 180°.

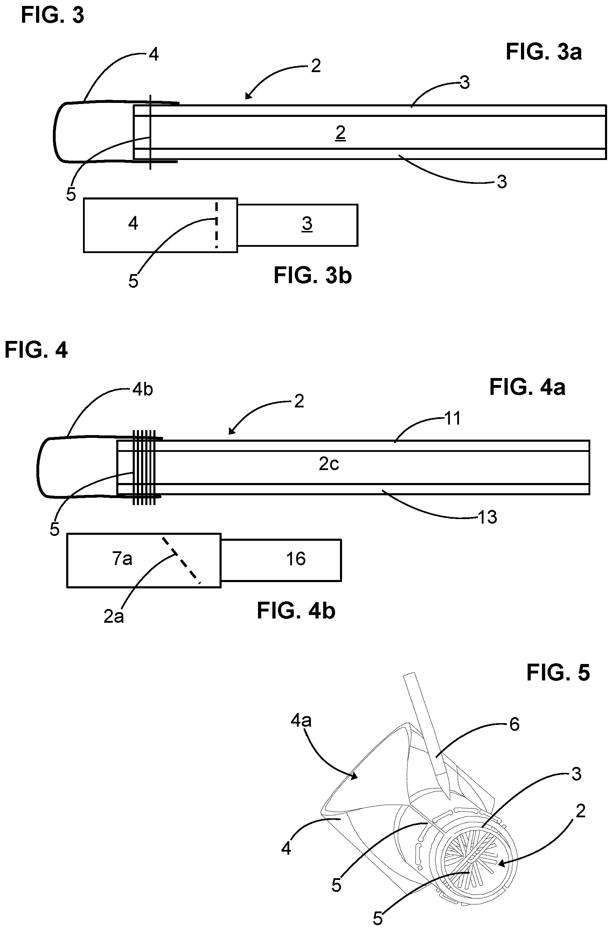

Dans un mode de réalisation particulier illustré à la figure 3, les différentes liaisons qui lient fixement la sangle 4 avec l'âme 2 appartiennent toutes à un même plan qui est perpendiculaire à l'axe longitudinal A de la gaine 3 et de l'âme 2. De manière préférentielle, le décalage angulaire est constant entre les liaisons consécutives. La figure 3a illustre une vue en coupe avec les liaisons qui sont toutes dans le même plan. La figure 3b illustre une vue de côté dans laquelle on peut observer les points du fil 5 qui se déplacent sur le périmètre. Avec deux arcs de cercle égaux à 180°, les liaisons s'étendent sur un secteur angulaire égal à 360°.

Dans un autre mode de réalisation particulier illustré à la figure 4, les différentes liaisons qui lient fixement la sangle 4 avec l'âme 2 sont décalées angulairement l'une de l'autre et la couture se déplace selon l'axe longitudinal A de la gaine 3 et de l'âme 2. La couture représente un agencement en colimaçon. De manière préférentielle, le décalage angulaire est constant entre les liaisons consécutives et le décalage selon l'axe longitudinal A est également constant. La zone de fixation entre la gaine 3 et la sangle 4 est plus étendu selon l'axe longitudinal A que dans la configuration précédente. La figure 4a illustre une vue en coupe avec les liaisons qui sont décalées dans des plans différents. La figure 4b illustre une vue de côté dans laquelle on peut observer les points du fil 5 qui se décalent pour assurer un décalage angulaire ainsi qu'un décalage le long de l'axe longitudinal A. Lorsque les liaisons consécutives se décalent angulairement et le long de l'axe longitudinal, il est avantageux que l'arc de cercle formé par la face d'attaque de l'aiguille représente au moins 180° voire 360°. Par au moins 360°, on entend que la zone de fixation fait plus d'un tour autour de l'âme et de la gaine, par exemple plusieurs tours autour de l'âme et de la gaine.

Il est possible de moduler la distance de décalage entre deux points consécutifs selon l'axe longitudinal et même de moduler le sens de déplacement entre les points.

Il est possible de combiner ces deux modes de réalisation avec une zone de fixation qui possède une extrémité formée par une première série de liaisons qui appartient à un premier plan perpendiculaire à l'axe longitudinal de la gaine 3 et de l'âme 2. La première série de liaisons est suivie par une deuxième série de liaisons qui possède des liaisons décalées angulairement et décalées selon l'axe longitudinal A. La deuxième série de liaisons peut être suivie par une troisième série de liaisons dont les liaisons appartiennent à un deuxième plan perpendiculaire à l'axe longitudinal de la gaine 3 et de l'âme 2. Le premier plan est séparé du deuxième plan par la deuxième série de liaisons.

De manière préférentielle, la largeur de la sangle 4 est inférieure ou égale au périmètre de la gaine 3 (2.π.R, avec R le rayon externe de la gaine 3). Lorsque la largeur de la gaine 4 est supérieure au périmètre de la gaine 3, il est avantageux que plusieurs épaisseurs de sangle 4 soient déposées sur la gaine 3 pour reproduire le plus fidèlement possible la forme de la paroi externe de la gaine 3.

Il est préférable que la largeur de la sangle 4 soit supérieure ou égale à 30% du périmètre de la gaine 3. Il est particulièrement avantageux que largeur de la sangle 4 soit inférieure ou égale à 97% du périmètre de la gaine 3 pour ne pas avoir à gérer un chevauchement de deux épaisseurs de la sangle 4.

Dans un mode de réalisation préférentiel, la sangle 4 est repliée de manière à définir une boucle 4a. La sangle 4 possède deux plis qui se font face. La gaine 3 et l'âme 2 de la corde 1 sont disposées entre les deux plis. Les deux plis de la sangle 4 recouvrent la gaine 3 et sont fixées par le au moins un fil 5 qui forme les multiples liaisons. Le fil 5 traverse le premier pli, une première épaisseur de la gaine 3, l'âme 2 en passant par la section centrale, une deuxième épaisseur de la gaine 3 et le deuxième pli pour former des premières liaisons. Des deuxièmes liaisons sont réalisées par le au moins un fil 5 qui traverse selon le chemin inverse, c'est-à-dire le deuxième pli, une première épaisseur de la gaine 3, l'âme 2 en passant par la section centrale, une deuxième épaisseur de la gaine 3 et le premier pli. Dans le mode de réalisation illustré aux figures 3 et 4, la boucle 4a est disposée dans le prolongement de l'âme 2 et de la gaine 3 selon l'axe longitudinal A. En alternative, la boucle est formée par la sangle 4 sans avoir à former les deux plis fixés à la gaine 3.

Préférentiellement, lorsque la sangle 4 possède deux plis qui recouvrent la gaine 3, les deux plis recouvrent au moins 75% du périmètre externe de la gaine 3 et avantageusement forme 100% du périmètre externe de la gaine 3 ou un peu moins de 100% du périmètre.

Dans un mode de réalisation particulier, la gaine 3 est munie d'une zone à frottement accru à proximité de la zone de recouvrement de la gaine 3 par la sangle 4. La zone de frottement accrue permet de mieux contrôler la rotation de la gaine 3 et de l'âme 2 lors de la formation des liaisons avec une machine à coudre. Un manchon peut être fixé sur la gaine 3. Le manchon est texturé avec des zones en saillies qui permettent de contrôler la rotation de l'âme 2 et de la gaine 3 autour de l'axe longitudinal A et ainsi mieux contrôler le décalage angulaire entre les liaisons.

Lors de la couture, la sangle 4, la gaine 3 et l'âme 2 tournent à la même vitesse autour de l'axe longitudinal de l'âme 2. L'aiguille traverse l'âme 2 et la gaine 3 en traversant la section centrale, de préférence en passant par le centre de l'âme pour se connecter à l'âme sur la plus grande distance disponible.

Lors de la formation des liaisons au moyen de la machine à coudre, l'aiguille attaque radialement la gaine 3. Le réglage de la machine à coudre est plus facile à réaliser. L'utilisation d'une couture radiale qui passe systématiquement par la zone centrale de l'âme 2 permet de réduire le taux de rupture des aiguilles lors des opérations de couture.

La figure 5 illustre l'utilisation d'une aiguille 6 qui s'insère dans la sangle 4, dans la gaine 3 et dans l'âme 2 pour former les liaisons au moyen du fil 5.

## Revendications

1. Corde (1) comportant :
- une âme (2) s'étendant selon un axe longitudinal (A) ;
- une gaine (3) entourant l'âme (2), la gaine (3) s'étendant selon l'axe longitudinal (A) ;
- une sangle (4) recouvrant au moins partiellement la gaine (3) selon une section perpendiculaire à l'axe longitudinal (A), la sangle (4) étant séparée de l'âme (2) par la gaine (3) ;
- une couture formée au moyen d'au moins un fil (5) traversant plusieurs fois la sangle (4), la gaine (3) et l'âme (2) pour former plusieurs liaisons qui montent fixement la sangle (4) sur l'âme (2) et sur la gaine (3) ;
corde (1) **caractérisée en ce que** les liaisons traversent une section centrale de l'âme (2), la section centrale correspondant à une section circulaire représentant moins de 50% de la section de l'âme (2) et **en ce que** les liaisons sont décalées angulairement les unes des autres lors d'une observation selon l'axe longitudinal (A).

2. Corde (1) selon la revendication 1 dans laquelle les liaisons successives s'étendent selon des diamètres de l'ensemble formé par l'âme (2) et la gaine (3).

3. Corde (1) selon l'une quelconque des revendications 1 et 2 dans laquelle les liaisons sont contenues dans un plan qui est perpendiculaire à l'axe longitudinal (A).

4. Corde (1) selon l'une quelconque des revendications 1 et 2 dans laquelle deux liaisons consécutives sont décalées selon l'axe longitudinal (A).

5. Corde (1) selon l'une des revendications 3 et 4 dans laquelle les liaisons successives s'étendent sur un secteur angulaire au moins égal à 180°.

6. Corde (1) selon la revendication précédente dans laquelle les liaisons successives s'étendent sur un secteur angulaire au moins égal à 360°.

7. Corde (1) selon l'une quelconque des revendications précédentes dans laquelle la sangle (4) est repliée pour former une boucle, deux plis de la sangle (4) étant montés fixement à la gaine (3).

8. Corde (1) selon la revendication précédente dans laquelle la boucle est fixée à une extrémité de la gaine (3) et s'étend selon l'axe longitudinal (A) dans le prolongement de la gaine (3).

9. Procédé de réalisation d'une corde (1) selon l'une quelconque des revendications précédentes comportant les étapes suivantes :
- fournir une âme (2) et une gaine (3) recouvrant l'âme (2), l'âme (2) et la gaine (3) s'étendant selon un axe longitudinal (A) ;
- fournir une sangle (4) ;
- recouvrir la gaine (3) par la sangle (4) ;
- monter fixement la sangle (4) sur la gaine (3) et l'âme (2) au moyen d'au moins un fil (5) qui traverse à plusieurs reprises une section centrale de l'âme 2, la gaine (3) et la sangle (4), la section centrale correspondant à une section circulaire représentant moins de 50% de la section de l'âme (2) et en ce que les liaisons sont décalées angulairement les uns des autres par rotation de la sangle (4), de l'âme (2) et de la gaine (3) autour de l'axe longitudinal (A) par rapport à une aiguille (6) qui introduit le fil (5) dans la sangle (4), la gaine (3) et l'âme (2).

## Patentansprüche

1. Seil (1), umfassend:
- eine Seele (2), die sich entlang einer Längsachse (A) erstreckt;
- einen Mantel (3), der die Seele (2) umgibt, wobei der Mantel (3) sich entlang der Längsachse (A) erstreckt;
- einen Gurt (4), der den Mantel (3) entlang eines Abschnitts senkrecht zur Längsachse (A) mindestens teilweise bedeckt, wobei der Gurt (4) durch den Mantel (3) von der Seele (2) getrennt ist;
- eine Naht, die die durch mindestens einen Faden (5) gebildet wird, der mehrmals durch den Gurt (4), den Mantel (3) und die Seele (2) verläuft, um mehrere Verbindungen zu bilden, die den Gurt (4) an die Seele (2) und an den Mantel (3) befestigen;
wobei das Seil (1) **dadurch gekennzeichnet ist, dass** die Verbindungen durch einen zentralen Abschnitt der Seele (2) verlaufen, wobei der zentrale Abschnitt einem kreisförmigen Abschnitt entspricht, der weniger als 50 % des Querschnitts der Seele (2) ausmacht, und dass die Verbindungen entlang der Längsachse (A) gesehen zueinander winkelversetzt sind.

2. Seil (1) nach Anspruch 1, wobei die aufeinanderfolgenden Verbindungen sich entlang der Durchmesser der Einheit erstrecken, die durch die Seele (2) und den Mantel (3) gebildet wird.

3. Seil (1) nach einem der Ansprüche 1 und 2, wobei die Verbindungen in einer Ebene liegen, die senkrecht zur Längsachse (A) ist.

4. Seil (1) nach einem der Ansprüche 1 und 2, wobei zwei aufeinanderfolgende Verbindungen entlang der Längsachse (A) versetzt sind.

5. Seil (1) nach einem der Ansprüche 3 und 4, wobei die aufeinanderfolgenden Verbindungen sich über einen Winkelsektor von mindestens 180° erstrecken.

6. Seil (1) nach dem vorherigen Anspruch, wobei die aufeinanderfolgenden Verbindungen sich über einen Winkelsektor von mindestens 360° erstrecken.

7. Seil (1) nach einem der vorherigen Ansprüche, wobei der Gurt (4) gefalzt ist, um eine Schlaufe zu bilden, und zwei Falzen des Gurts (4) an dem Mantel (3) befestigt sind.

8. Seil (1) nach dem vorherigen Anspruch, wobei die Schlaufe an einem Ende des Mantels (3) befestigt ist und sich in der Verlängerung des Mantels (3) entlang der Längsachse (A) erstreckt.

9. Verfahren zur Herstellung eines Seils (1) nach einem der vorherigen Ansprüche, umfassend die folgenden Schritte:
- Bereitstellen einer Seele (2) und eines Mantels (3), der die Seele (2) bedeckt, wobei die Seele (2) und der Mantel (3) sich entlang einer Längsachse (A) erstrecken;
- Bereitstellen eines Gurts (4);
- Bedecken des Mantels (3) mit dem Gurt (4);
- Befestigen des Gurts (4) an den Mantel (3) und die Seele (2) durch mindestens einen Faden (5), der mehrmals durch einen zentralen Abschnitt der Seele (2), des Mantels (3) und des Gurts (4) verläuft, wobei der zentrale Abschnitt einem kreisförmigen Abschnitt entspricht, der weniger als 50 % des Querschnitts der Seele (2) ausmacht, und die Verbindungen durch Drehen des Gurts (4), der Seele (2) und des Mantels (3) um die Längsachse (A) relativ zu einer Nadel (6), die den Faden (5) in den Gurt (4), den Mantel (3) und die Seele (2) einführt, zueinander winkelversetzt sind.

## Claims

1. Rope (1) comprising:
- a core (2) extending along a longitudinal axis (A);
- a sheath (3) surrounding the core (2), the sheath (3) extending along the longitudinal axis (A);
- a strap (4) at least partially covering the sheath (3) over a section perpendicular to the longitudinal axis (A), the strap (4) being separated from the core (2) by the sheath (3);
- a seam formed by means of at least one thread (5) passing several times through the strap (4), the sheath (3) and the core (2) to form several links to attach the strap (4) fixedly on the core (2) and on the sheath (3);
rope (1) **characterised in that** the links pass through a central section of the core (2), the central section corresponding to a circular section representing less than 50% of the cross-section of the core (2) and **in that** the links are angularly offset from one another when observed along the longitudinal axis (A).

2. Rope (1) according to claim 1 wherein the successive links extend along diameters of the assembly formed by the core (2) and the sheath (3).

3. Rope (1) according to either one of claims 1 and 2 wherein the links are contained in a plane that is perpendicular to the longitudinal axis (A).

4. Rope (1) according to either one of claims 1 and 2 wherein two consecutive links are offset along the longitudinal axis (A).

5. Rope (1) according to one of claims 3 and 4 wherein the successive links extend over an angular sector at least equal to 180°.

6. Rope (1) according to the foregoing claim wherein the successive links extend over an angular sector at least equal to 360°.

7. Rope (1) according to any one of the foregoing claims wherein the strap (4) is folded to form a loop, two folds of the strap (4) being fixedly attached to the sheath (3).

8. Rope (1) according to the foregoing claim wherein the loop is fixed to one end of the sheath (3) and extends along the longitudinal axis (A) in the continuation of the sheath (3).

9. Method for manufacturing a rope (1) according to any one of the foregoing claims comprising the following steps:
- providing a core (2) and a sheath (3) covering the core (2), the core (2) and sheath (3) extending along a longitudinal axis (A);
- providing a strap (4);
- covering the sheath (3) by the strap (4);
- securing the strap (4) fixedly on the sheath (3) and on the core (2) by means of at least one thread (5) that passes several times through a central section of the core (2), the sheath (3) and the strap (4), the central section corresponding to a circular section representing less than 50% of the cross-section of the core (2), and in that the links are offset angularly from one another by a rotation of the strap (4), the core (2) and the sheath (3) around the longitudinal axis (A) with respect to a needle (6) that inserts the thread (5) in the strap (4), the sheath (3) and the core (2).
